# EUROPEAN PATENT SPECIFICATION

(11) **EP 3 605 881 B1**
(45) Date of publication and mention of the grant of the patent: **30.08.2023**
(21) Application number: 18771607.1
(22) Date of filing: 21.03.2018
(51) Int. Cl.: H04J 3/16, H04B 10/27

(54) **METHOD AND DEVICE FOR TRANSMITTING AND RECEIVING NETWORK MANAGEMENT INFORMATION, TRANSMITTING APPARATUS AND RECEIVING APPARATUS**
VERFAHREN UND VORRICHTUNG ZUM SENDEN UND EMPFANGEN VON NETZWERKVERWALTUNGSINFORMATIONEN, SENDEVORRICHTUNG UND EMPFANGSVORRICHTUNG
PROCÉDÉ ET DISPOSITIF DE TRANSMISSION ET DE RÉCEPTION D'INFORMATIONS DE GESTION DE RÉSEAU, APPAREIL DE TRANSMISSION ET APPAREIL DE RÉCEPTION

(30) Priority: 21.03.2017 CN 201710169656
(43) Date of publication of application: 05.02.2020
(60) Divisional application: 23187764.8
(73) Proprietor: ZTE Corporation, Shenzhen, Guangdong 518057 (CN)
(72) Inventor: LIU, Feng, Shenzhen Guangdong 518057 (CN)
(74) Representative: Krauns, Christian
(86) International application number: PCT/CN2018/079897
(87) International publication number: WO 2018/171641

(56) References cited:
- WO-A1-2015/106386
- CN-A- 106 341 207
- US-A1- 2012 076 139
- US-A1- 2016 119 076
- JAMES HUANG JAMES HUANG@HUAWEI COM: "Possible New Work Items for 802.1 Related to OIF Flex Ethernet (FlexE) ; new-flexe-huang-possible-work-0516-v01", IEEE DRAFT; NEW-FLEXE-HUANG-POSSIBLE-WORK-0516-V01, IEEE-SA, PISCATAWAY, NJ USA, vol. 802, no. v01, 23 May 2016 (2016-05-23), pages 1-8, XP068109597, [retrieved on 2016-05-23]
- WANG Q ET AL: "RSVP-TE Signaling Extensions in support of Flexible Ethernet networks; draft-wang-ccamp-flexe-signaling-02.txt", RSVP-TE SIGNALING EXTENSIONS IN SUPPORT OF FLEXIBLE ETHERNET NETWORKS; DRAFT-WANG-CCAMP-FLEXE-SIGNALING-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 July 2016 (2016-07-08), pages 1-13, XP015114107, [retrieved on 2016-07-08]

## Description

### TECHNICAL FIELD

The present application relates to the field of communications technologies and relates to, for example, a method and device for transmitting and receiving network management information, a transmitting apparatus and a receiving apparatus.

### BACKGROUND

The rapid increase of user network information traffic has promoted the rapid development of the communication network information delivery bandwidth. The interface bandwidth speed of a network element has increased from 10M (unit: bit/second) to 100M, and then to 1G, 10G and 100G. A large number of 100G optical modules have been used on the market. Although 400G optical modules have been developed, a 400G optical modules is expensive and exceeds the price of four 100G optical modules, resulting in the lack of commercial economic value of 400G optical modules.

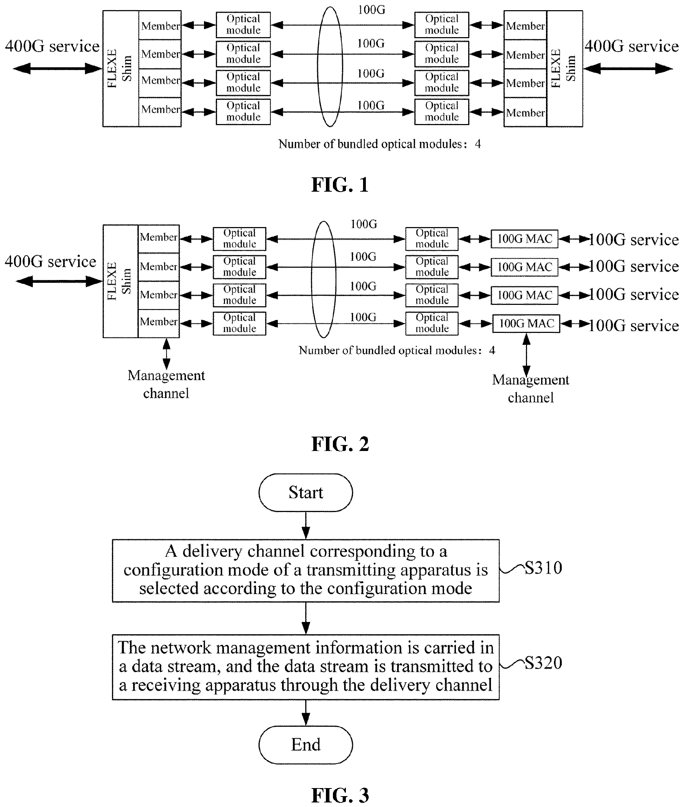

To deliver 400G services on a 100G optical module, the International Organization for Standardization defines the FLEX-Ethernet (FlexE) protocol. The FlexE protocol bundles multiple 100G optical modules so that the 100G optical modules form a high-speed delivery channel. FIG. 1 is a schematic diagram of theoretical networking of a FlexE protocol in the existing art. As shown in FIG. 1, four 100G optical modules are bundled by the FlexE protocol to form one 400G delivery channel and thus the transmission speed of the four 100G optical modules is equivalent to the transmission speed of one 400G optical module. In this way, the delivery requirements of 400G services are satisfied without increasing costs.

According to the FlexE protocol, intercommunication based on the FlexE protocol can be merely achieved in condition that both network elements support the FlexE protocol, such that the remote network management may be achieved. During network element networking, each optical port is in a fixed mode by default, usually in an Ethernet mode (non-FlexE mode). After the network elements are powered on, all the optical ports of the network elements on both sides are in the Ethernet mode. In this case, the network elements can intercommunicate with each other, the network management channel is normal, and the entire network can be managed remotely. The management apparatus in the network delivers a command of enabling the FlexE mode to each network element. Each network element in the network starts to enable the FlexE mode. Due to the time difference of signal transmission, as regards time, some network elements enable the FlexE mode first, some network elements enable the FlexE mode later, and other network elements may not receive or receive only part of the command of enabling the FlexE mode. As a result, problems occur when network elements that have enabled the FlexE mode are connected to network elements in the Ethernet mode. FIG. 2 is a schematic diagram of problematic networking in actual networking of a FlexE protocol in the existing art. As shown in FIG. 2, the network element on the left is in the FlexE mode while the network element on the right is in the Ethernet mode. The two network elements support different protocols. The positions of the management channels for the two network elements are different and the two network elements cannot intercommunicate with each other. As a result, the management channels are interrupted and all network elements cannot be connected. Furthermore, if one network element fails to switch from the Ethernet mode to the FlexE mode, the entire network will be interrupted and paralyzed, and cannot be managed.

The US 2012/076139 A1 discloses a node capable of conforming to one of a plurality of Ethernet standards. It includes an Ethernet controller unit that performs auto-negotiation with a switch to exchange information concerning an interface speed, to determine an interface speed to be used based on the information concerning the interface speed, and to receive information including a setting Ethernet standard set as an Ethernet standard to be used; a storage unit that stores a node's available Ethernet standard which is an Ethernet standard to which the node can conform; and a controller that performs setting such that the node operates using a coincident standard between the Ethernet standard stored in the storage unit and setting Ethernet standard and connects a link to the switch.

J. Huang describes further techniques in the document "Possible New Work Items for 802.1 Related to OIF Flex Ethernet (FlexE); new-flexe-huang-possible-work-0516-v01", IEEE DRAFT; NEW-FLEXE-HUANG-POSSIBLE-WORK-0516-V01, IEEE-SA, PISCATAWAY, NJ USA, (20160523), vol. 802, no. 1, pages 1 to 8.

Q. Wang et al. describe further techniques in the document "RSVP-TE Signaling Extensions in support of Flexible Ethernet networks; draft-wang-ccamp-flexe-signaling-02.txt", RSVP-TE Signaling Extensions in support of flexible Ethernet Networks, Internet Engineering Task Force, IETF; Internet Society (ISOC), pages 1 to 13.

### SUMMARY

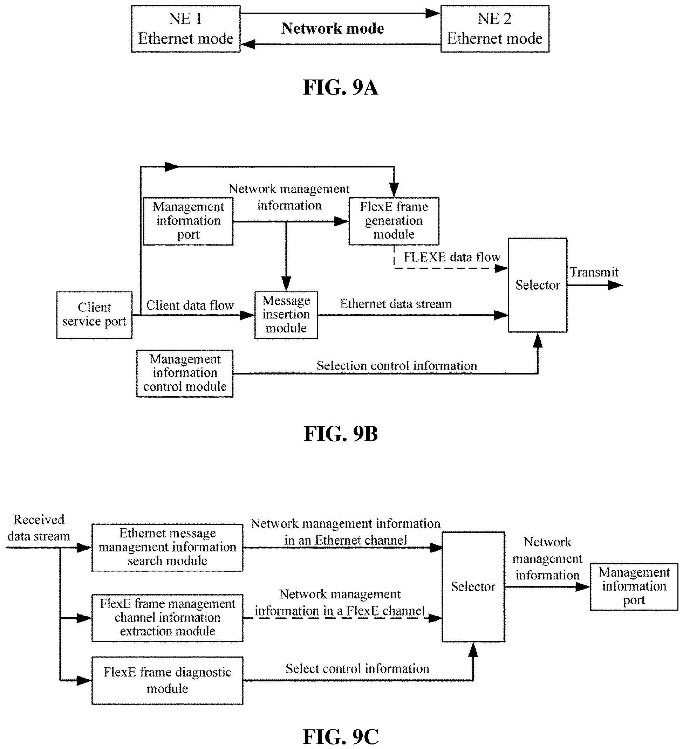

The following is the summary of the subject matter described herein in detail. This summary is not intended to limit the scope of the claims. The problem of the present invention is solved by a method for transmitting network management information according to the independent claim 1 as well as by a method for receiving network management information according to the independent claim 3 as well as by a device for transmitting network management information according to the independent claim 6 as well as by a device for receiving network management information according to the independent claim 8 as well as by a system for network management information according to claim 11. The dependent claims refer to further advantageous developments of the present invention. The invention is explained in relation with figures 9B and 9C and is defined by the appended claims.

In embodiments of the present application, the transmitting end selects the delivery channel corresponding to the current configuration mode and transmits the network management information through the delivery channel corresponding to the current configuration mode; the receiving end receives the data stream, identifies the configuration mode of the transmitting end, and acquires the network management information in the delivery channel corresponding to the configuration mode. In embodiments of the present application, even if the configuration mode of the transmitting end network element is different from the configuration mode of the receiving end network element, different network elements can intercommunicate with each other and the network management information transmitted by the transmitting end network element can be correctly acquired.

### BRIEF DESCRIPTION OF DRAWINGS

FIG. 1 is a schematic diagram of theoretical networking of a FlexE protocol in the existing art;
FIG. 2 is a schematic diagram of problematic networking in actual networking of a FlexE protocol in the existing art;
FIG. 3 is a flowchart of a method for transmitting network management information according to an embodiment of the present application;
FIG. 4 is a schematic diagram of inserting an overhead block into a data stream according to an embodiment of the present application;
FIG. 5 is a structure diagram of an overhead frame according to an embodiment of the present application;
FIG. 6 is a flowchart of a method for receiving network management information according to an embodiment of the present application;
FIG. 7 is a structure diagram of a device for transmitting network management information according to an embodiment of the present application;
FIG. 8 is a structure diagram of a device for receiving network management information according to an embodiment of the present application;
FIG. 9A is a schematic diagram of transmitting and receiving network management information according to an embodiment of the present application;
FIG. 9B is a schematic diagram of a path used by a network element transmitting end to transmit network management information according to an embodiment of the present application;
FIG. 9C is a schematic diagram of a path used by a network element receiving end to receive network management information according to an embodiment of the present application;
FIG. 10A is a schematic diagram of transmitting and receiving network management information according to an embodiment of the present application;
FIG. 10B is a schematic diagram of a path used by a network element receiving end to receive network management information according to an embodiment of the present application;
FIG. 11A is a schematic diagram of transmitting and receiving network management information according to an embodiment of the present application;
FIG. 11B is a schematic diagram of a path used by a network element transmitting end to transmit network management information according to an embodiment of the present application;
FIG. 12 is a structure diagram of hardware of a transmitting apparatus according to an embodiment of the present application; and
FIG. 13 is a structure diagram of hardware of a receiving apparatus according to an embodiment of the present application.

### DETAILED DESCRIPTION

In embodiments of the present application, the transmitting end selects the delivery channel corresponding to the current configuration mode and transmits the network management information through the delivery channel corresponding to the current configuration mode; the receiving end receives the data stream, identifies the configuration mode of the transmitting end, and acquires the network management information in the delivery channel corresponding to the configuration mode. In embodiments of the present application, even if the configuration mode of the transmitting end network element is different from the configuration mode of the receiving end network element, different network elements can intercommunicate with each other and the network management information transmitted by the transmitting end network element can be correctly acquired.

The present application will be described in detail in conjunction with the drawings and the embodiments. It is to be understood that the embodiments described herein are intended to explain and not to limit the present application.

An embodiment of the present application provides a method for transmitting network management information. The executor of this embodiment is a transmitting apparatus. The transmitting apparatus may be an optical module.

FIG. 3 is a flowchart of a method for transmitting network management information according to an embodiment of the present application. The method includes step S310 and step S320.

In S310, a delivery channel corresponding to a configuration mode of a transmitting apparatus is selected according to the configuration mode.

It is feasible to identify the configuration mode of the transmitting apparatus and to select the delivery channel corresponding to the configuration mode according to the configuration mode of the transmitting apparatus.

The configuration mode of the transmitting apparatus includes: an Ethernet mode and a flexible Ethernet (FlexE) mode.

In an embodiment of the present application, it is feasible to query the configuration information of the transmitting apparatus to identify whether the current configuration mode of the transmitting apparatus is the Ethernet mode or the FlexE mode.

The type of the delivery channel includes: an Ethernet channel and a FlexE channel.

The delivery channel corresponding to the Ethernet mode is the Ethernet channel, and the delivery channel corresponding to the FlexE mode is the FlexE channel.

In S320, the network management information is carried in a data stream, and the data stream is transmitted to a receiving apparatus through the delivery channel.

In an embodiment of the present application, the network management information is used for implementing network management, and the network management information may be, for example, query information, report information or control information. The data stream in the corresponding format is transmitted according to the configuration mode of the transmitting apparatus. The transmitting apparatus transmits an Ethernet data stream in the Ethernet mode and transmits a FlexE data stream in the FlexE mode.

In condition that the delivery channel corresponding to the configuration mode is the Ethernet channel, the network management information is inserted into the Ethernet data stream, and the Ethernet data stream is transmitted to the receiving apparatus through the Ethernet channel, so that the network management information is transmitted along with the Ethernet data stream.

In condition that the delivery channel corresponding to the configuration mode of the transmitting apparatus is the FlexE channel, the network management information is encapsulated in a FlexE frame of the FlexE data stream, and the FlexE data stream is transmitted to the receiving apparatus through the FlexE channel. In an embodiment of the present application, a data block carrying service data and the network management information may be combined, and the network management information may be carried in an overhead block so that a data stream in the FlexE format is generated. The FlexE frame is an overhead frame. The overhead frame includes eight consecutive overhead blocks. The network management information may be encapsulated in one or more overhead blocks.

In an embodiment of the present application, in the FlexE mode, before sending data, an optical module uses the 64/66 encoding technology to extend 64-bit data to 66 bits, and then the optical module sends a 66-bit data block through the optical port of the optical module. The added two bits are the first two of the 66 bits and serve as the start flag of the 66 bits. When receiving the data, the optical port of the optical module discriminates the 66-bit data block from the received data stream, recovers the original 64-bit data from the 66-bit data block, and then reassembles the data to form a new data message.

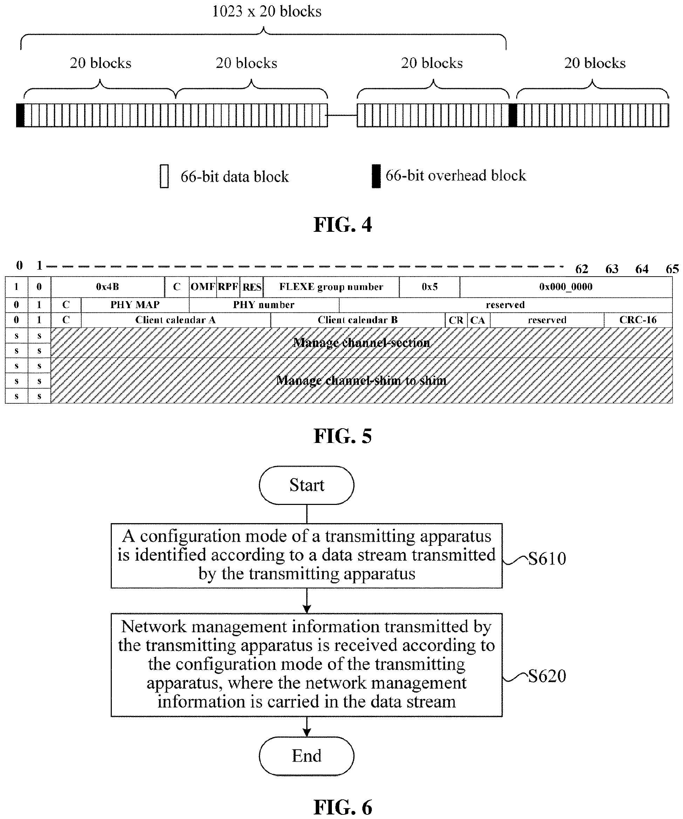

The FlexE protocol is in a 64-bit-to-66-bit conversion layer. The optical module inserts an overhead block every 20 × 1023 66-bit data blocks. Before the 66-bit data blocks are transmitted, the 66-bit data blocks are sorted and planned. Every 20 66-bit data blocks may be classified into one data block group. 20 data blocks represent 20 timeslots. Each timeslot represents a service speed of 5G bandwidth. FIG. 4 is a schematic diagram of inserting an overhead block into a data stream according to an embodiment of the present application. As shown in FIG. 4, when a FlexE data stream is transmitted, one overhead block is inserted each time transmission of 1023 data block groups (1023 × 20 data blocks) is completed. In FIG. 4, a white block indicates a data block while a black block indicates an overhead block. After one overhead block is inserted, data blocks continue to be transmitted; after transmission of the second 1023 × 20 data blocks is completed, another overhead block is inserted; and so on. In this way, during the process of transmitting data blocks, an overhead block is periodically inserted. The interval between two adjacent overhead blocks is 1023 × 20 data blocks.

One overhead block is 66-bit data. During the process of transmitting a data stream, an overhead block is inserted every 1023 × 20 data blocks. An overhead block plays the role of positioning in the entire data stream. When an overhead block is found, the position of the first data block group and the position of subsequent data block groups in the data stream can be determined.

FIG. 5 is a structure diagram of an overhead frame according to an embodiment of the present application. Eight consecutive overhead blocks form an overhead frame. The content of the overhead frame is as shown in FIG. 5. An overhead block consists of a 2-bit block flag and 64-bit block content. The block flag is located in the first two columns. The block content is located in the last 64 columns. The block flag of the first overhead block is 10, and the block flags of the subsequent seven overhead blocks are 01 or SS (SS indicates that the content is uncertain).

The content of the first overhead block includes: 0x4B (4B in hexadecimal), C bit of the first overhead block (indicating adjustment control), OMF bit (indicating overhead frame multiframe), RPF bit (indicating remote defect), RES bit (reserved bit), FlexE group number (indicating the serial number of a bundle group), 0x5 (5 in hexadecimal), and 000000 (0 in hexadecimal). 0x4B and 0x5 are the flag indicators of the first overhead block. During the process of receiving, if the corresponding positions in an overhead block are 0x4B and 0x5, then this overhead block is the first overhead block in the overhead frame, and this overhead block and the subsequent seven consecutive overhead blocks constitute one overhead frame.

The second overhead block includes C bit (indicating adjustment control), PHY MAP (indicating usage status of physical layer (PHY)), PHY number (indicating which physical layer slot is located), and reserved bit (indicating reserved content that is not defined).

The third overhead block includes C bit (indicating adjustment control), client calendar A (indicating the type of customer service loaded in slot), client calendar B (indicating the type of customer service loaded in slot), CR (indicating addition or deletion of feedback on customer service in slot), and CRC-16 (indicating CRC-16 check bit).

The fourth overhead block to the eighth overhead block may be used for carrying network management information. In an embodiment of the present application, in the overhead frame, management channel information is divided into two levels: manage channel-section (management channel for section) and manage channel-shim to shim (management channel for shim to shim). Manage channel-section is located in the 4th overhead block to the 5th overhead block, and manage channel-shim to shim is located in the 6th overhead block to the 8th overhead block. If a data stream reaches a receiving end only after the data stream passes through a third-party network, then the network management information is carried in manage channel-shim to shim. If a data stream directly reaches a receiving end without passing through a third-party network, the network management information is carried in at least one of manage channel-section and manage channel-shim to shim.

An embodiment of the present application provides a method for receiving network management information. The executor of this embodiment is a receiving apparatus. FIG. 6 is a flowchart of a method for receiving network management information according to an embodiment of the present application. The method includes step S610 and step S620.

In S610, a configuration mode of a transmitting apparatus is identified according to a data stream transmitted by the transmitting apparatus.

In S620, network management information transmitted by the transmitting apparatus is received according to the configuration mode of the transmitting apparatus, where the network management information is carried in the data stream.

The configuration mode of the transmitting apparatus includes: an Ethernet mode and a flexible Ethernet (FlexE) mode.

The data stream transmitted by the transmitting apparatus may be an Ethernet data stream or a FlexE data stream.

When the configuration mode of the transmitting apparatus is identified, in condition that the data stream is identified as in an Ethernet message format, then the data stream is an Ethernet data stream and the configuration module of the transmitting apparatus is in an Ethernet mode; in condition that the data stream is identified as in a FlexE data stream format, then the data stream is a FlexE data stream and the configuration module of the transmitting apparatus is in a FlexE mode.

In condition that the received data stream is an Ethernet data stream, the network management information is searched for in the Ethernet data stream; if the received data stream is a FlexE data stream, a FlexE frame in the FlexE data stream is queried and the network management information is extracted from the FlexE frame.

In an embodiment of the present application, a delivery channel corresponding to the configuration module is selected according to the configuration mode of the transmitting apparatus; and the network management information transmitted by the transmitting apparatus is received in the delivery channel corresponding to the configuration module. The delivery channel corresponding to the Ethernet mode is an Ethernet channel, and the delivery channel corresponding to the FlexE mode is a FlexE channel.

When the configuration mode of the transmitting apparatus is identified, whether a FlexE frame exists in the data stream is detected; the frame determination is performed on data stream in condition that the FlexE frame exists in the data stream; and the configuration mode of the transmitting apparatus is identified as the FlexE mode in condition that the frame determination is successful, and the configuration mode of the transmitting apparatus is identified as the Ethernet mode if the frame determination is unsuccessful. That is, in condition that no FlexE frame exists in the data stream or the frame determination is unsuccessful, the transmitting apparatus is in the Ethernet mode.

In an embodiment of the present application, the FlexE frame is an overhead frame. The performing frame determination on a data stream means detecting whether an overhead block exists in the data stream. In condition that the overhead block exists, the position of the overhead block in the overhead frame is determined. In condition that the first overhead block through the fifth overhead block can be found consecutively in chronological order in the overhead frame, the frame determination is successful; if the first overhead block through the fifth overhead block cannot be found consecutively in chronological order in the overhead frame, the frame determination is unsuccessful.

In an embodiment of the present application, the delivery channel corresponding to the configuration module is selected according to the configuration mode of the transmitting apparatus, that is, the delivery channel corresponding to the configuration module is gated; and before the network management information transmitted by the transmitting apparatus is received in the delivery channel corresponding to the configuration module, the method further includes step A and step B.

In step A, the data stream transmitted by the transmitting apparatus is searched for the network management information, and in condition that the network management information is found, the network management information is inputted to the selected delivery channel corresponding to the configuration mode so that the network management information transmitted by the transmitting apparatus is received in the selected delivery channel corresponding to the configuration mode.

In B, the data stream transmitted by the transmitting apparatus is searched for a FlexE frame, and in condition that the FlexE frame is found, the network management information is extracted from the FlexE frame and the extracted network management information is inputted to the selected delivery channel corresponding to the configuration mode so that the network management information transmitted by the transmitting apparatus is received in the selected delivery channel corresponding to the configuration mode.

In an embodiment of the present application, the FlexE frame is an overhead block.

It is to be noted that, in an embodiment of the present application, step A and step B may be performed simultaneously. Since the configuration mode of the transmitting apparatus is the Ethernet mode or the FlexE mode, the network management information is acquired in step A or step B. The configuration mode corresponding to the data stream type (Ethernet data stream or FlexE data stream) processed by the step in which the network management information is acquired corresponds to the selected delivery channel.

The solutions provided in this embodiment of the present application enables intercommunication between the transmitting apparatus and the receiving apparatus, reduces the risk of network interruption and paralysis, and enhances the network reliability.

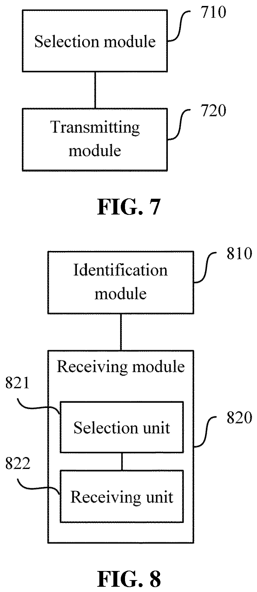

An embodiment of the present application provides a device for transmitting network management information. FIG. 7 is a structure diagram of a device for transmitting network management information according to an embodiment of the present application. The device for transmitting network management information in this embodiment of the present application may be disposed in a transmitting apparatus.

The device for transmitting network management information includes:
a selection module 710, which is configured to select, according to a configuration mode of the transmitting apparatus, a delivery channel corresponding to the configuration mode; and
a transmitting module 720, which is configured to transmit a data stream to a receiving apparatus through the delivery channel, where the network management information is carried in the data stream.

In an embodiment of the present application, the configuration mode of the transmitting apparatus includes: an Ethernet mode and a flexible Ethernet (FlexE) mode, where the delivery channel corresponding to the Ethernet mode is an Ethernet channel, and the delivery channel corresponding to the FlexE mode is a FlexE channel.

In an embodiment of the present application, the transmitting module 720 is configured to: in condition that the delivery channel corresponding to the configuration mode is an Ethernet channel, insert the network management information into an Ethernet data stream, and transmit the Ethernet data stream to the receiving apparatus through the Ethernet channel; and in condition that the delivery channel corresponding to the configuration mode is a FlexE channel, encapsulate the network management information in a FlexE frame of a FlexE data stream, and transmit the FlexE data stream to the receiving apparatus through the FlexE channel.

In an embodiment of the present application, the FlexE frame is an overhead frame.

The functions of the device in this embodiment of the present application are described in the preceding method embodiment; therefore, for what not described in detail in this embodiment of the present application, see related description in the preceding embodiment.

An embodiment of the present application provides a device for receiving network management information. FIG. 8 is a structure diagram of a device for receiving network management information according to an embodiment of the present application. The device for receiving network management information in this embodiment of the present application may be disposed in a receiving apparatus.

The device for receiving network management information includes:
an identification module 810, which is configured to identify, according to a data stream transmitted by a transmitting apparatus, a configuration mode of the transmitting apparatus; and
a receiving module 820, which is configured to receive, according to the configuration mode of the transmitting apparatus, the network management information transmitted by the transmitting apparatus, where the network management information is carried in the data stream.

In an embodiment of the present application, the receiving module 820 includes: a selection unit 821 and a receiving unit 822.

The selection unit 821 is configured to select, according to the configuration mode of the transmitting apparatus, a delivery channel corresponding to the configuration mode.

The receiving unit 822 is configured to receive, in the delivery channel corresponding to the configuration mode, the network management information transmitted by the transmitting apparatus, where the network management information is carried in the data stream.

In an embodiment of the present application, the configuration mode of the transmitting apparatus includes: an Ethernet mode and a flexible Ethernet (FlexE) mode, where the delivery channel corresponding to the Ethernet mode is an Ethernet channel, and the delivery channel corresponding to the FlexE mode is a FlexE channel.

In an embodiment of the present application, the identification module 810 is configured to: detect whether a FlexE frame exists in the data stream; perform frame determination the data stream in condition that the FlexE frame exists in the data stream; and identify the configuration mode of the transmitting apparatus as the FlexE mode in condition that the frame determination is successful, and identify the configuration mode of the transmitting apparatus as the Ethernet mode in condition that the frame determination is unsuccessful.

In an embodiment of the present application, the apparatus further includes: a search module and an extraction module. The two modules are not shown in the figure.

The search module is configured to, before the network management information transmitted by the transmitting apparatus is received in the delivery channel corresponding to the configuration mode, search the data stream transmitted by the transmitting apparatus for the network management information, and in condition that the network management information is found, input the network management information to the selected delivery channel corresponding to the configuration mode so that the network management information transmitted by the transmitting apparatus is received in the selected delivery channel corresponding to the configuration mode.

The extraction module is configured to, before the network management information transmitted by the transmitting apparatus is received in the delivery channel corresponding to the configuration mode, search the data stream transmitted by the transmitting apparatus for a FlexE frame, and in condition that the FlexE frame is found, extract the network management information from the FlexE frame and input the extracted network management information to the selected delivery channel corresponding to the configuration mode so that the network management information transmitted by the transmitting apparatus is received in the selected delivery channel corresponding to the configuration mode.

In an embodiment of the present application, the FlexE frame is an overhead frame.

The functions of the device in this embodiment of the present application are described in the preceding method embodiment; therefore, for what not described in detail in this embodiment of the present application, see related description in the preceding embodiment.

Several specific examples are provided below to further describe the method for transmitting and receiving network management information in embodiments of the present application.

Since a network element includes a transmitting end and a receiving end, the network element can serve as both a transmitting apparatus and a receiving apparatus.

An embodiment of the present application provides a method for transmitting and receiving network management information of network elements having the same configuration mode. FIG. 9A is a schematic diagram of transmitting and receiving network management information according to an embodiment of the present application. FIG. 9B is a schematic diagram of a path used by a network element transmitting end to transmit network management information according to an embodiment of the present application. FIG. 9C is a schematic diagram of a path used by a network element receiving end to receive network management information according to an embodiment of the present application.

In this embodiment of the present application, as shown in FIG. 9A, both the network element 1 and the network element 2 are in an Ethernet mode, and the network element 1 may transmit network management information to the network element 2 and may receive network management information transmitted by the network element 2.

The following gives a detailed description by using the transmitting end and the receiving end of the network element 1 as an example.

As shown in FIG. 9B, at the transmitting end of the network element 1, a client service port outputs a client data stream, and a management information port outputs network management information; a message insertion module inserts the network management information into the client data stream so that an Ethernet data stream is formed; and a management information control module controls a selector to output the Ethernet data stream through an Ethernet channel. In the Ethernet mode, a FlexE frame generation module at the transmitting end discards a FlexE data stream. Here the management information control module is equivalent to the preceding selection module 710, and the FlexE frame generation module and the message insertion module are equivalent to the preceding transmitting module 720.

As shown in FIG. 9C, at the receiving end of the network element 1, an Ethernet message management information search module searches for network management information, and a FlexE frame management channel information extraction module extracts the network management information; since the network element 2 is in the Ethernet mode, at the receiving end of the network element 1, the Ethernet message management information search module can find correct network management information, and the FlexE frame management channel information extraction module cannot extract the network management information and cannot output a result because an overhead block cannot be found; a FlexE frame diagnostic module fails to find the overhead block and thus fails in frame determination, outputs selection control information, and controls a selector to output the network management information to a management information port through an Ethernet channel. The Ethernet message management information search module is equivalent to the preceding search module. The FlexE frame management channel information extraction module is equivalent to the preceding extraction module. The FlexE frame diagnostic module and the management information port are equivalent to the preceding receiving unit 820. The FlexE frame diagnostic module is equivalent to the preceding selection unit 821. The management information port is equivalent to the preceding receiving unit 822.

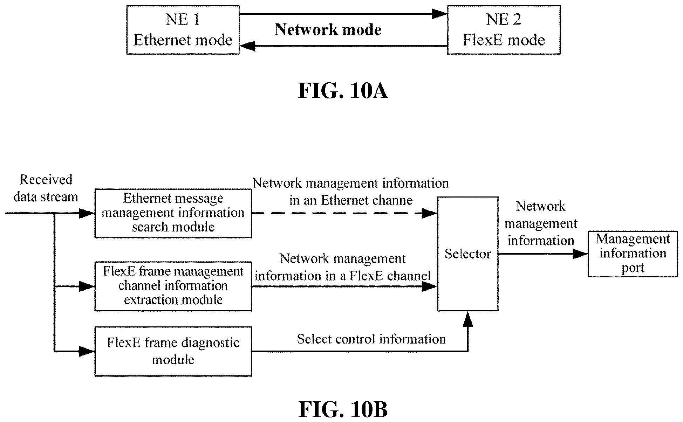

An embodiment of the present application provides a method for transmitting and receiving network management information of network elements having different configuration modes. FIG. 10A is a schematic diagram of transmitting and receiving network management information according to an embodiment of the present application. FIG. 10B is a schematic diagram of a path used by a network element receiving end to receive network management information according to an embodiment of the present application.

In an embodiment of the present application, the network element 1 is in an Ethernet mode while the network element 2 is in a FlexE mode, and the network element 1 may transmit network management information to the network element 2 and may receive network management information transmitted by the network element 2.

The following gives a detailed description of the transmitting end and the receiving end of the network element 1.

As shown in FIG. 9B, at the transmitting end of the network element 1, a client service port outputs a client data stream, and a management information port outputs network management information; a message insertion module inserts the network management information into the client data stream so that an Ethernet data stream is formed; and a management information control module controls a selector to output the Ethernet data stream through an Ethernet channel. In the Ethernet mode, a FlexE frame generation module at the transmitting end does not work and thus does not output a FlexE data stream.

As shown in FIG. 10B, at the receiving end of the network element 1, an Ethernet message management information search module searches for network management information, and a FlexE frame management channel information extraction module extracts the network management information; since the network element 2 is in the FlexE mode, at the receiving end of the network element 1, the received data stream is a FlexE data stream; the Ethernet message management information search module cannot find correct network management information or finds incorrect information; the FlexE frame management channel information extraction module can find a FlexE overhead block, extract the network management information and output a result; a FlexE frame diagnostic module can find the overhead block and thus succeeds in frame determination, outputs selection control information, and controls a selector to output the network management information to a management information port through a FlexE channel.

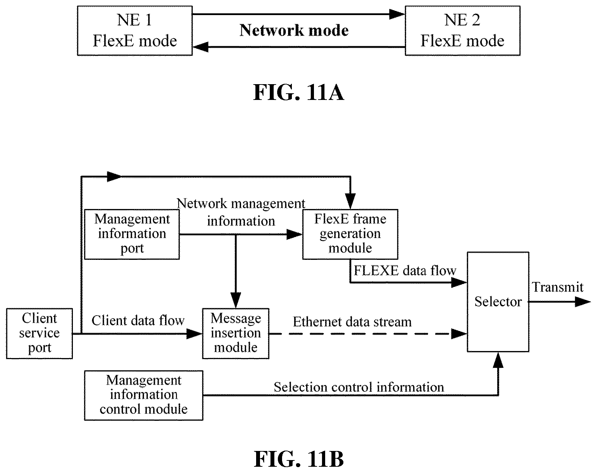

An embodiment of the present application provides a method for transmitting and receiving network management information of network elements having the same configuration mode. FIG. 11A is a schematic diagram of transmitting and receiving network management information according to an embodiment of the present application. FIG. 11B is a schematic diagram of a path used by a network element transmitting end to transmit network management information according to an embodiment of the present application.

In an embodiment of the present application, both the network element 1 and the network element 2 are in a FlexE mode, and the network element 1 may transmit network management information to the network element 2 and may receive network management information transmitted by the network element 2.

The following gives a detailed description of the transmitting end and the receiving end of the network element 1.

As shown in FIG. 11B, at the transmitting end of the network element 1, a client service port outputs a client data stream, and a management information port outputs network management information; a FlexE frame generation module works normally, and combines the client service stream and the network management information into a FlexE frame structure to form a FlexE data stream; a management information control module controls a selector to output the FlexE data stream through a FlexE channel. A result outputted by a message insertion module is discarded.

As shown in FIG. 10B, at the receiving end of the network element 1, an Ethernet message management information search module searches for network management information, and a FlexE frame management channel information extraction module extracts the network management information; since the network element 2 is in the FlexE mode, at the receiving end of the network element 1, the received data stream is a FlexE data stream; the Ethernet message management information search module cannot find correct network management information or finds incorrect information; the FlexE frame management channel information extraction module can find a FlexE overhead block, extract the network management information and output a result; a FlexE frame diagnostic module can find the overhead block and thus succeeds in frame determination, outputs selection control information, and controls a selector to output the network management information to a management information port through a FlexE channel.

In this embodiment of the present application, the data stream is received at the receiving end of the network element, the configuration mode of the transmitting end is identified, and the network management information is acquired in the delivery channel corresponding to the configuration mode. In embodiments of the present application, even if the configuration mode of the transmitting end network element is different from the configuration mode of the receiving end network element, different network elements can intercommunicate with each other and the network management information transmitted by the transmitting end network element can be correctly acquired, so that the network reliability is enhanced.

An embodiment of the present application further provides computer programs, a storage medium storing the programs, and a transmitting apparatus. The transmitting apparatus includes a processor for processing data, a memory for storing computer programs, and a data transceiver for transmitting and receiving the data, where when executing the computer programs stored in the memory, the processor is configured to: select, according to a configuration mode of a transmitting apparatus, a delivery channel corresponding to the configuration mode; and carry network management information in a data stream, and transmit the data stream to a receiving apparatus through the delivery channel.

In an embodiment of the present application, the configuration mode of the transmitting apparatus includes: an Ethernet mode and a flexible Ethernet (FlexE) mode, where the delivery channel corresponding to the Ethernet mode is an Ethernet channel, and the delivery channel corresponding to the FlexE mode is a FlexE channel.

In an embodiment of the present application, carrying the network management information in the data stream, and transmitting the data stream to the receiving apparatus through the delivery channel includes: in condition that the delivery channel corresponding to the configuration mode is an Ethernet channel, inserting the network management information into an Ethernet data stream, and transmitting the Ethernet data stream to the receiving apparatus through the Ethernet channel; and in condition that the delivery channel corresponding to the configuration mode is a FlexE channel, encapsulating the network management information in a FlexE frame of a FlexE data stream, and transmitting the FlexE data stream to the receiving apparatus through the FlexE channel.

In an embodiment of the present application, the FlexE frame is an overhead frame.

An embodiment of the present application further provides a computer-readable storage medium, which is configured to store computer programs for executing the method provided in any embodiment of the present application.

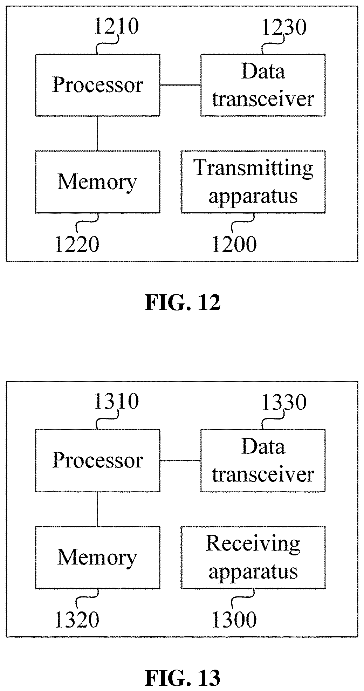

The method for transmitting network management information disclosed in the preceding embodiment may be implemented in the corresponding transmitting apparatus. The network element as the transmitting apparatus may be an optical module. FIG. 12 is a structure diagram of hardware of a transmitting apparatus according to an embodiment of the present application. The transmitting apparatus is used for implementing the method for transmitting network management information. As shown in FIG. 12, the transmitting apparatus 1200 may include one or more (merely one is shown in the figure) processors 1210 (the processor 1210 may include, but is not limited to, a processing unit such as a microprocessor MCU or a programmable logic device FPGA), a memory 1220 for storing data, and a data transceiver 1230 for transmitting and/or receiving the data. It is to be understood by those skilled in the art that the structure shown in FIG. 12 is merely illustrative and does not limit the structure of the preceding electronic device. For example, by splitting or merging the preceding functions, the transmitting apparatus 1200 may further include more or fewer components than those shown in FIG. 12, or have configuration different from that shown in FIG. 12.

The memory 1220 may be used for storing software programs and modules of application software. The program instruction/modules corresponding to the method for transmitting network management information corresponding to the transmitting apparatus disclosed in the preceding embodiment may be stored in the memory 1220. The method for transmitting network management information is described in detail in the preceding embodiment and thus will not be repeated in detail in this embodiment.

The processor 1210 runs (executes) the software programs and modules stored in the memory 1220 to perform function applications and data processing, that is, to implement the preceding method. The memory 1220 may include a high-speed random access memory, and may also include a non-volatile memory such as one or more magnetic storage devices, flash memories, or other non-volatile solid state memories. In some examples, the memory 1220 may further include memories (cloud memories) disposed remote from the processor 1210. These remote memories may be connected to the transmitting apparatus 1200 via a network. Examples of the preceding network include, but are not limited to, the Internet, an intranet, a local area network, a mobile communication network and a combination thereof.

The data transceiver 1230 is used for receiving or transmitting data via a network. Examples of the preceding network may include a wireless network provided by a communication provider of the transmitting apparatus 1200. In one example, the data transceiver 1230 includes a Network Interface Controller (NIC) that may be connected to other network devices through a base station to communicate with the Internet. In one example, the data transceiver 1230 may be a Radio Frequency (RF) module for communicating with the Internet wirelessly.

An embodiment of the present application further provides a receiving apparatus. The receiving apparatus includes a processor for processing data, a memory for storing computer programs, and a data transceiver for transmitting and receiving the data, where when executing the computer programs stored in the memory, the processor is configured to: identify, according to a data stream transmitted by a transmitting apparatus, a configuration mode of the transmitting apparatus; and receive, according to the configuration mode of the transmitting apparatus, network management information transmitted by the transmitting apparatus, where the network management information is carried in the data stream.

In an embodiment of the present application, receiving, according to the configuration mode of the transmitting apparatus, the network management information transmitted by the transmitting apparatus includes: selecting, according to the configuration mode of the transmitting apparatus, a delivery channel corresponding to the configuration mode; and receiving, in the delivery channel corresponding to the configuration mode, the network management information transmitted by the transmitting apparatus.

In an embodiment of the present application, the configuration mode of the transmitting apparatus includes: an Ethernet mode and a flexible Ethernet (FlexE) mode, where the delivery channel corresponding to the Ethernet mode is an Ethernet channel, and the delivery channel corresponding to the FlexE mode is a FlexE channel.

In an embodiment of the present application, identifying, according to the data stream transmitted by the transmitting apparatus, the configuration mode of the transmitting apparatus includes: detecting whether a FlexE frame exists in the data stream; performing frame determination on the data stream in condition that the FlexE frame exists in the data stream; and identifying the configuration mode of the transmitting apparatus as the FlexE mode in condition that the frame determination is successful, and identifying the configuration mode of the transmitting apparatus as the Ethernet mode in condition that the frame determination is unsuccessful.

In an embodiment of the present application, before receiving, in the delivery channel corresponding to the configuration mode, the network management information transmitted by the transmitting apparatus, the receiving apparatus is further configured to: search the data stream transmitted by the transmitting apparatus for the network management information, and in condition that the network management information is found, input the network management information to the selected delivery channel corresponding to the configuration mode so that the network management information transmitted by the transmitting apparatus is received in the selected delivery channel corresponding to the configuration mode; and search the data stream transmitted by the transmitting apparatus for a FlexE frame, and in condition that the FlexE frame is found, extract the network management information from the FlexE frame and input the extracted network management information to the selected delivery channel corresponding to the configuration mode so that the network management information transmitted by the transmitting apparatus is received in the selected delivery channel corresponding to the configuration mode.

In an embodiment of the present application, the FlexE frame is an overhead frame.

The method for receiving network management information disclosed in the preceding embodiment may be implemented in the corresponding receiving apparatus. The network element as the receiving apparatus may be an optical module. FIG. 13 is a structure diagram of hardware of a receiving apparatus according to an embodiment of the present application. The receiving apparatus is used for implementing the method for receiving network management information. As shown in FIG. 13, the receiving apparatus 1300 may include one or more (only one is shown in the figure) processors 1310 (the processor 1310 may include, but is not limited to, a processing unit such as a microprocessor MCU or a programmable logic device FPGA), a memory 1320 for storing data, and a data transceiver 1330 for transmitting and/or receiving the data. It is to be understood by those skilled in the art that the structure shown in FIG. 13 is merely illustrative and does not limit the structure of the preceding electronic device. For example, by splitting or merging the preceding functions, the receiving apparatus 1300 may further include more or fewer components than those shown in FIG. 13, or have configuration different from that shown in FIG. 13.

The memory 1320 may be used for storing software programs and modules of application software. The program instruction/modules corresponding to the method for transmitting network management information corresponding to the receiving apparatus disclosed in the preceding embodiment may be stored in the memory 1320. The method for transmitting network management information is described in detail in the preceding embodiment and thus will not be repeated in detail in this embodiment.

The processor 1310 runs (executes) the software programs and modules stored in the memory 1320 to perform function applications and data processing, that is, to implement the preceding method. The memory 1320 may include a high-speed random access memory, and may also include a non-volatile memory such as one or more magnetic storage devices, flash memories, or other non-volatile solid state memories. In some examples, the memory 1320 may further include memories (cloud memories) disposed remote from the processor 1310. These remote memories may be connected to the receiving apparatus 1300 via a network. Examples of the preceding network include, but are not limited to, the Internet, an intranet, a local area network, a mobile communication network and a combination thereof.

The data transceiver 1330 is used for receiving or transmitting data via a network. Examples of the preceding network may include a wireless network provided by a communication provider of the receiving apparatus 1300. In one example, the data transceiver 1330 includes a Network Interface Controller (NIC) that may be connected to other network devices through a base station to communicate with the Internet. In one example, the data transceiver 1330 may be a Radio Frequency (RF) module for communicating with the Internet wirelessly.

### INDUSTRIAL APPLICABILITY

In embodiments of the present application, even if the configuration mode of the transmitting end network element is different from the configuration mode of the receiving end network element, different network elements can intercommunicate with each other and the network management information transmitted by the transmitting end network element can be correctly acquired.

## Claims

1. A method for transmitting network management information, applied to a transmitting apparatus (1200), comprising:
selecting (S310), according to a configuration mode of a transmitting apparatus (1200), a delivery channel corresponding to the configuration mode; and
carrying (S320) the network management information in a data stream, and transmitting the data stream to a receiving apparatus (1300) through the delivery channel;
wherein the configuration mode of the transmitting apparatus (1200) comprises an Ethernet mode and a flexible Ethernet, FlexE, mode, wherein a delivery channel corresponding to the Ethernet mode is an Ethernet channel, and a delivery channel corresponding to the FlexE mode is a FlexE channel;
**characterized in that**, the carrying the network management information in the data stream, and transmitting the data stream to the receiving apparatus (1300) through the delivery channel comprises:
in condition that the delivery channel corresponding to the configuration mode is an Ethernet channel, inserting the network management information into an Ethernet data stream, and transmitting the Ethernet data stream to the receiving apparatus (1300) through the Ethernet channel; and
in condition that the delivery channel corresponding to the configuration mode is a FlexE channel, encapsulating the network management information in a FlexE frame of a FlexE data stream, and transmitting the FlexE data stream to the receiving apparatus (1300) through the FlexE channel;
wherein the FlexE frame is an overhead frame.

2. The method of claim 1, wherein
the overhead frame comprises eight consecutive overhead blocks, and the network management information is encapsulated in one or more overhead blocks.

3. A method for receiving network management information, applied to a receiving apparatus (1300), comprising:
identifying (S610), according to a data stream transmitted by a transmitting apparatus (1200), a configuration mode of the transmitting apparatus (1200); and
receiving (S620), according to the configuration mode of the transmitting apparatus (1200), the network management information transmitted by the transmitting apparatus (1200), wherein the network management information is carried in the data stream;
wherein the receiving, according to the configuration mode of the transmitting apparatus (1200), the network management information transmitted by the transmitting apparatus (1200) comprises:
selecting, according to the configuration mode of the transmitting apparatus (1200), a delivery channel corresponding to the configuration mode; and
receiving, in the delivery channel corresponding to the configuration mode, the network management information transmitted by the transmitting apparatus (1200);
the configuration mode of the transmitting apparatus (1200) comprises: an Ethernet mode and a flexible Ethernet, FlexE, mode, wherein a delivery channel corresponding to the Ethernet mode is an Ethernet channel, and a delivery channel corresponding to the FlexE mode is a FlexE channel;
**characterized in that**, the identifying, according to the data stream transmitted by the transmitting apparatus (1200), the configuration mode of the transmitting apparatus (1200) comprises:
detecting whether a FlexE frame exists in the data stream;
performing frame determination on the data stream in condition that the FlexE frame exists in the data stream; and
identifying the configuration mode of the transmitting apparatus (1200) as the FlexE mode in condition that the frame determination is successful, and identifying the configuration mode of the transmitting apparatus (1200) as the Ethernet mode in condition that the frame determination is unsuccessful; wherein the FlexE frame is an overhead frame.

4. The method of claim 3, wherein
the overhead frame comprises eight consecutive overhead blocks, and the network management information is encapsulated in one or more overhead blocks.

5. The method of claim 3, wherein before the receiving, in the delivery channel corresponding to the configuration mode, the network management information transmitted by the transmitting apparatus (1200), the method further comprises:
searching the data stream transmitted by the transmitting apparatus (1200) for the network management information, and in condition that the network management information is found, inputting the network management information to the selected delivery channel corresponding to the configuration mode so that the network management information transmitted by the transmitting apparatus (1200) is received in the selected delivery channel corresponding to the configuration mode; and
searching the data stream transmitted by the transmitting apparatus (1200) for a FlexE frame, and in condition that the FlexE frame is found, extracting the network management information from the FlexE frame and inputting the extracted network management information to the selected delivery channel corresponding to the configuration mode so that the network management information transmitted by the transmitting apparatus (1200) is received in the selected delivery channel corresponding to the configuration mode; wherein the FlexE frame is an overhead frame.

6. A device for transmitting network management information, comprising:
a selection module (710), which is configured to select, according to a configuration mode of a transmitting apparatus (1200), a delivery channel corresponding to the configuration mode; and
a transmitting module (720), which is configured to carry the network management information in a data stream, and to transmit the data stream to a receiving apparatus (1300) through the delivery channel;
wherein the configuration mode of the transmitting apparatus (1200) comprises: an Ethernet mode and a flexible Ethernet, FlexE, mode,
wherein a delivery channel corresponding to the Ethernet mode is an Ethernet channel, and a delivery channel corresponding to the FlexE mode is a FlexE channel;
**characterized in that**, the transmitting module is configured to:
in condition that the delivery channel corresponding to the configuration mode is an Ethernet channel, insert the network management information into an Ethernet data stream, and transmit the Ethernet data stream to the receiving apparatus (1300) through the Ethernet channel; and
in condition that the delivery channel corresponding to the configuration mode is a FlexE channel, encapsulate the network management information in a FlexE frame of a FlexE data stream, and transmit the FlexE data stream to the receiving apparatus (1300) through the FlexE channel; wherein the FlexE frame is an overhead frame.

7. The device of claim 6, wherein
the overhead frame comprises eight consecutive overhead blocks, and the network management information is encapsulated in one or more overhead blocks.

8. A device for receiving network management information, comprising:
an identification module (810), which is configured to identify, according to a data stream transmitted by a transmitting apparatus (1200), a configuration mode of the transmitting apparatus (1200); and
a receiving module (820), which is configured to receive, according to the configuration mode of the transmitting apparatus (1200), the network management information transmitted by the transmitting apparatus (1200), wherein the network management information is carried in the data stream;
wherein the configuration mode of the transmitting apparatus (1200) comprises: an Ethernet mode and a flexible Ethernet, FlexE, mode,
wherein a delivery channel corresponding to the Ethernet mode is an Ethernet channel, and a delivery channel corresponding to the FlexE mode is a FlexE channel;
**characterized in that**, the transmitting module (720) is configured to:
in condition that the delivery channel corresponding to the configuration mode is an Ethernet channel, insert the network management information into an Ethernet data stream, and transmit the Ethernet data stream to the receiving apparatus (1300) through the Ethernet channel; and
in condition that the delivery channel corresponding to the configuration mode is a FlexE channel, encapsulate the network management information in a FlexE frame of a FlexE data stream, and transmit the FlexE data stream to the receiving apparatus (1300) through the FlexE channel; wherein the FlexE frame is an overhead frame.

9. The device of claim 8, wherein
the overhead frame comprises eight consecutive overhead blocks, and the network management information is encapsulated in one or more overhead blocks.

10. The device of claim 8, further comprising:
a search module, which is configured to, before the network management information transmitted by the transmitting apparatus (1200) is received in the delivery channel corresponding to the configuration mode, search the data stream transmitted by the transmitting apparatus (1200) for the network management information, and in condition that the network management information is found, input the network management information to the selected delivery channel corresponding to the configuration mode so that the network management information transmitted by the transmitting apparatus (1200) is received in the selected delivery channel corresponding to the configuration mode; and
an extraction module, which is configured to, before the network management information transmitted by the transmitting apparatus (1200) is received in the delivery channel corresponding to the configuration mode, search the data stream transmitted by the transmitting apparatus (1200) for a FlexE frame, and in condition that the FlexE frame is found, extract the network management information from the FlexE frame and input the extracted network management information to the selected delivery channel corresponding to the configuration mode so that the network management information transmitted by the transmitting apparatus (1200) is received in the selected delivery channel corresponding to the configuration mode; wherein the FlexE frame is an overhead frame.

11. A system for network management information, comprising: a device for transmitting network management information according to claim 6 and a device for receiving network management information according to claim 8.

## Patentansprüche

1. Verfahren zum Übertragen von Netzverwaltungsinformationen, welches auf eine Sendevorrichtung (1200) angewandt wird und welches umfasst:
ein Auswählen (S310) gemäß einem Konfigurationsmodus einer Sendevorrichtung (1200) von einem Zuführkanal, der dem Konfigurationsmodus entspricht, und
ein Tragen (S320) der Netzverwaltungsinformationen in einem Datenstrom, und ein Übertragen des Datenstroms an eine Empfangsvorrichtung (1300) über den Zuführkanal,
wobei der Konfigurationsmodus der Sendevorrichtung (1200) einen Ethernet-Modus und einen flexiblen Ethernet-Modus, FlexE-Modus, aufweist, wobei ein dem Ethernet-Modus entsprechender Zuführkanal ein Ethernet-Kanal ist und ein dem FlexE-Modus entsprechender Zuführkanal ein FlexE-Kanal ist
**dadurch gekennzeichnet, dass** das Tragen der Netzwerkverwaltungsinformationen in dem Datenstrom und das Übertragen des Datenstroms an die Empfangsvorrichtung (1300) über den Zuführkanal umfasst:
unter der Bedingung, dass der Zuführkanal, der dem Konfigurationsmodus entspricht, ein Ethernet-Kanal ist, ein Einfügen der Netzwerkverwaltungsinformationen in einen Ethernet-Datenstrom und ein Übertragen des Ethernet-Datenstroms an die Empfangsvorrichtung (1300) über den Ethernet-Kanal, und
unter der Bedingung, dass der Zuführkanal, der dem Konfigurationsmodus entspricht, ein FlexE-Kanal ist, ein Einkapseln der Netzwerkverwaltungsinformationen in einen FlexE-Rahmen eines FlexE-Datenstroms und ein Übertragen des FlexE-Datenstroms über den FlexE-Kanal an die Empfangsvorrichtung (1300), wobei der FlexE-Rahmen ein Overhead-Rahmen ist.

2. Verfahren nach Anspruch 1, wobei
der Overhead-Rahmen acht aufeinanderfolgende Overhead-Blöcke aufweist und wobei die Netzverwaltungsinformationen in einem oder mehreren Overhead-Blöcken eingekapselt sind.

3. Verfahren zum Empfangen von Netzverwaltungsinformationen, welches auf eine Empfangsvorrichtung (1300) angewandt wird und welches umfasst:
ein Identifizieren (S610) eines Konfigurationsmodus einer Sendevorrichtung (1200) gemäß einem von der Sendevorrichtung (1200) übertragenen Datenstrom, und
ein Empfangen (S620) der von der Sendevorrichtung (1200) übertragenen Netzverwaltungsinformationen gemäß dem Konfigurationsmodus der Sendevorrichtung (1200), wobei die Netzverwaltungsinformationen in dem Datenstrom getragen werden,
wobei das Empfangen der von der Sendevorrichtung (1200) gesendeten Netzwerkverwaltungsinformationen gemäß dem Konfigurationsmodus der Sendevorrichtung (1200) umfasst:
ein Auswählen eines Zuführkanals, der dem Konfigurationsmodus entspricht, gemäß dem Konfigurationsmodus der Sendevorrichtung (1200), und
ein Empfangen der von der Sendevorrichtung (1200) gesendeten Netzverwaltungsinformationen in dem Zuführkanal, der dem Konfigurationsmodus entspricht,
wobei der Konfigurationsmodus der Sendevorrichtung (1200) einen Ethernet-Modus und einen flexiblen Ethernet-Modus, FlexE-Modus, aufweist, wobei ein Zuführkanal, der dem Ethernet-Modus entspricht, ein Ethernet-Kanal ist, und wobei ein Zuführkanal, der dem FlexE-Modus entspricht, ein FlexE-Kanal ist,
**dadurch gekennzeichnet, dass** das Identifizieren des Konfigurationsmodus der Sendevorrichtung (1200) gemäß dem von der Sendevorrichtung (1200) übertragenen Datenstrom umfasst:
ein Erkennen, ob ein FlexE-Rahmen in dem Datenstrom vorhanden ist,
ein Durchführen einer Rahmenbestimmung an dem Datenstrom unter der Bedingung, dass der FlexE-Rahmen in dem Datenstrom vorhanden ist, und
ein Identifizieren des Konfigurationsmodus der Sendevorrichtung (1200) als den FlexE-Modus unter der Bedingung, dass die Rahmenbestimmung erfolgreich gewesen ist, und ein Identifizieren des Konfigurationsmodus der Sendevorrichtung (1200) als den Ethernet-Modus unter der Bedingung, dass die Rahmenbestimmung nicht erfolgreich gewesen ist, wobei der FlexE-Rahmen ein Overhead-Rahmen ist.

4. Verfahren nach Anspruch 3, wobei
der Overhead-Rahmen acht aufeinanderfolgende Overhead-Blöcke aufweist und wobei die Netzverwaltungsinformationen in einem oder mehreren Overhead-Blöcken eingekapselt sind.

5. Verfahren nach Anspruch 3, wobei das Verfahren vor dem Empfangen der von der Sendevorrichtung (1200) gesendeten Netzverwaltungsinformationen in dem Zuführkanal, der dem Konfigurationsmodus entspricht ferner umfasst:
ein Durchsuchen des von der Sendevorrichtung (1200) gesendeten Datenstroms nach den Netzwerkverwaltungsinformationen, und unter der Bedingung, dass die Netzwerkverwaltungsinformationen gefunden werden, ein Eingeben der Netzwerkverwaltungsinformation in den ausgewählten Zuführkanal, der dem Konfigurationsmodus entspricht, so dass die von der Sendevorrichtung (1200) gesendeten Netzwerkverwaltungsinformationen in dem ausgewählten Zuführkanal, der dem Konfigurationsmodus entspricht, empfangen werden, und
ein Durchsuchen des von der Sendevorrichtung (1200) gesendeten Datenstroms nach einem FlexE-Rahmen, und unter der Bedingung, dass der FlexE-Rahmen gefunden wird, ein Extrahieren der Netzwerkverwaltungsinformationen aus dem FlexE-Rahmen und ein Eingeben der extrahierten Netzwerkverwaltungsinformationen in den ausgewählten Zuführkanal, der dem Konfigurationsmodus entspricht, so dass die von der Sendevorrichtung (1200) gesendeten Netzwerkverwaltungsinformationen in dem ausgewählten Zuführkanal, der dem Konfigurationsmodus entspricht, empfangen werden, wobei der FlexE-Rahmen ein Overhead-Rahmen ist.

6. Vorrichtung zum Senden von Netzverwaltungsinformationen, welche aufweist:
ein Auswahlmodul (710), das ausgestaltet ist, um entsprechend einem Konfigurationsmodus einer Sendevorrichtung (1200) einen Zuführkanal, der dem Konfigurationsmodus entspricht auszuwählen, und
ein Übertragungsmodul (720), das ausgestaltet ist, um die Netzverwaltungsinformationen in einem Datenstrom zu tragen und um den Datenstrom über den Zuführkanal an eine Empfangsvorrichtung (1300) zu übertragen,
wobei der Konfigurationsmodus der Sendevorrichtung (1200) einen Ethernet-Modus und einen flexiblen Ethernet-Modus, FlexE-Modus, aufweist,
wobei ein Zuführkanal, der dem Ethernet-Modus entspricht, ein Ethernet-Kanal ist, und ein Zuführkanal, der dem FlexE-Modus entspricht, ein FlexE-Kanal ist,
**dadurch gekennzeichnet, dass** das Übertragungsmodul ausgestaltet ist, um
unter der Bedingung, dass der Zuführkanal, der dem Konfigurationsmodus entspricht, ein Ethernet-Kanal ist, die Netzwerkverwaltungsinformationen in einen Ethernet-Datenstrom einzufügen und den Ethernet-Datenstrom über den Ethernet-Kanal an die Empfangsvorrichtung (1300) zu übertragen, und
unter der Bedingung, dass der Zuführkanal, der dem Konfigurationsmodus entspricht, ein FlexE-Kanal ist, die Netzwerkverwaltungsinformationen in einen FlexE-Rahmen eines FlexE-Datenstroms einzukapseln und den FlexE-Datenstrom über den FlexE-Kanal an die Empfangsvorrichtung (1300) zu übertragen, wobei der FlexE-Rahmen ein Overhead-Rahmen ist.

7. Vorrichtung nach Anspruch 6, wobei
der Overhead-Rahmen acht aufeinanderfolgende Overhead-Blöcke aufweist, und wobei die Netzverwaltungsinformationen in einem oder mehreren Overhead-Blöcken eingekapselt sind.

8. Vorrichtung zum Empfangen von Netzverwaltungsinformationen, welche aufweist:
ein Identifikationsmodul (810), das ausgestaltet ist, um entsprechend einem von einer Sendevorrichtung (1200) übertragenen Datenstrom einen Konfigurationsmodus der Sendevorrichtung (1200) zu identifizieren, und
ein Empfangsmodul (820), das ausgestaltet ist, um entsprechend dem Konfigurationsmodus der Sendevorrichtung (1200) die von der Sendevorrichtung (1200) übertragenen Netzverwaltungsinformationen zu empfangen, wobei die Netzverwaltungsinformationen in dem Datenstrom getragen werden,
wobei der Konfigurationsmodus der Sendevorrichtung (1200) einen Ethernet-Modus und einen flexiblen Ethernet-Modus, FlexE-Modus, aufweist,
wobei ein Zuführkanal, der dem Ethernet-Modus entspricht, ein Ethernet-Kanal ist, und ein Zuführkanal, der dem FlexE-Modus entspricht, ein FlexE-Kanal ist,
**dadurch gekennzeichnet, dass** das Übertragungsmodul (720) ausgestaltet ist, um
unter der Bedingung, dass der dem Konfigurationsmodus entsprechende Zuführkanal ein Ethernet-Kanal ist, die Netzwerkverwaltungsinformationen in einen Ethernet-Datenstrom einzufügen und den Ethernet-Datenstrom über den Ethernet-Kanal an die Empfangsvorrichtung (1300) zu übertragen, und
unter der Bedingung, dass der Zuführkanal, der dem Konfigurationsmodus entspricht, ein FlexE-Kanal ist, die Netzwerkverwaltungsinformationen in einen FlexE-Rahmen eines FlexE-Datenstroms einzukapseln und den FlexE-Datenstrom über den FlexE-Kanal an die Empfangsvorrichtung (1300) zu übertragen, wobei der FlexE-Rahmen ein Overhead-Rahmen ist.

9. Vorrichtung nach Anspruch 8, wobei
der Overhead-Rahmen acht aufeinanderfolgende Overhead-Blöcke aufweist und die Netzverwaltungsinformationen in einem oder mehreren in einem oder mehreren Overhead-Blöcken eingekapselt sind.

10. Vorrichtung nach Anspruch 8, welche ferner aufweist:
ein Suchmodul, das ausgestaltet ist, um, bevor die von der Sendevorrichtung (1200) gesendeten Netzwerkverwaltungsinformationen in dem Zuführkanal, der dem Konfigurationsmodus entspricht, empfangen werden, den von der Sendevorrichtung (1200) gesendeten Datenstrom nach der Netzwerkverwaltungsinformation zu durchsuchen, und unter der Bedingung, dass die Netzwerkverwaltungsinformationen gefunden worden ist, die Netzwerkverwaltungsinformationen in den ausgewählten Zuführkanal, der dem Konfigurationsmodus entspricht, einzugeben, so dass die von der Sendevorrichtung (1200) gesendeten Netzwerkverwaltungsinformationen in dem Zuführkanal, der dem Konfigurationsmodus entspricht, ausgewählten empfangen werden, und
ein Extraktionsmodul, das ausgestaltet ist, um, bevor die von der Sendevorrichtung (1200) gesendeten Netzwerkverwaltungsinformationen in dem Zuführkanal, der dem Konfigurationsmodus entspricht, empfangen werden, den von der Sendevorrichtung (1200) gesendeten Datenstrom nach einem FlexE-Rahmen zu durchsuchen, und unter der Bedingung, dass der FlexE-Rahmen gefunden worden ist, die Netzwerkverwaltungsinformationen aus dem FlexE-Rahmen zu extrahieren und um die extrahierten Netzwerkverwaltungsinformationen in den ausgewählten Zuführkanal, der dem Konfigurationsmodus entspricht, einzugeben, so dass die von der Sendevorrichtung (1200) gesendete Netzwerkverwaltungsinformation in dem ausgewählten Zuführkanal, der dem Konfigurationsmodus entsprecht, empfangen wird, wobei der FlexE-Rahmen ein Overhead-Rahmen ist.

11. System für Netzverwaltungsinformationen, welche eine Vorrichtung zum Senden von Netzverwaltungsinformationen gemäß Anspruch 6 und eine Vorrichtung zum Empfangen von Netzverwaltungsinformationen gemäß Anspruch 8 aufweist.

## Revendications

1. Procédé pour la transmission d'informations de gestion de réseau, appliqué à un appareil de transmission (1200), comprenant :
la sélection (S310), selon un mode de configuration d'un appareil de transmission (1200), d'un canal de distribution correspondant au mode de configuration ; et
le transport (S320) des informations de gestion de réseau dans un flux de données et la transmission du flux de données à un appareil de réception (1300) par l'intermédiaire du canal de distribution ;
dans lequel le mode de configuration de l'appareil de transmission (1200) comprend un mode Ethernet et un mode Ethernet flexible, FlexE, dans lequel un canal de distribution correspondant au mode Ethernet est un canal Ethernet et un canal de distribution correspondant au mode FlexE est un canal FlexE ;
**caractérisé en ce que** le transport des informations de gestion de réseau dans le flux de données et la transmission du flux de données à l'appareil de réception (1300) par l'intermédiaire du canal de distribution comprennent :
à condition que le canal de distribution correspondant au mode de configuration soit un canal Ethernet, l'insertion des informations de gestion de réseau dans un flux de données Ethernet et la transmission du flux de données Ethernet à l'appareil de réception (1300) par l'intermédiaire du canal Ethernet ; et
à condition que le canal de distribution correspondant au mode de configuration soit un canal FlexE, l'encapsulation des informations de gestion de réseau dans une trame FlexE d'un flux de données FlexE et la transmission du flux de données FlexE à l'appareil de réception (1300) par l'intermédiaire du canal FlexE ;
dans lequel la trame FlexE est une trame de surdébit.

2. Procédé selon la revendication 1, dans lequel
la trame de surdébit comprend huit blocs de surdébit consécutifs et les informations de gestion de réseau sont encapsulées dans un ou plusieurs blocs de surdébit.

3. Procédé pour la réception d'informations de gestion de réseau, appliqué à un appareil de réception (1300), comprenant :
l'identification (S610), selon un flux de données transmis par un appareil de transmission (1200), d'un mode de configuration de l'appareil de transmission (1200) ; et
la réception (S620), selon le mode de configuration de l'appareil de transmission (1200), des informations de gestion de réseau transmises par l'appareil de transmission (1200), dans lequel les informations de gestion de réseau sont transportées dans le flux de données ;
dans lequel la réception, selon le mode de configuration de l'appareil de transmission (1200), des informations de gestion de réseau transmises par l'appareil de transmission (1200) comprend :
la sélection, selon le mode de configuration de l'appareil de transmission (1200), d'un canal de distribution correspondant au mode de configuration ; et
la réception, dans le canal de distribution correspondant au mode de configuration, des informations de gestion de réseau transmises par l'appareil de transmission (1200) ;
dans lequel le mode de configuration de l'appareil de transmission (1200) comprend : un mode Ethernet et un mode Ethernet flexible, FlexE, dans lequel un canal de distribution correspondant au mode Ethernet est un canal Ethernet et un canal de distribution correspondant au mode FlexE est un canal FlexE ;
**caractérisé en ce que** l'identification, selon le flux de données transmis par l'appareil de transmission (1200), du mode de configuration de l'appareil de transmission (1200) comprend :
la détection de l'existence ou non d'une trame FlexE dans le flux de données ;
la réalisation d'une détermination de trame sur le flux de données à condition que la trame FlexE existe dans le flux de données ; et
l'identification du mode de configuration de l'appareil de transmission (1200) en tant que mode FlexE à condition que la détermination de trame réussisse, et l'identification du mode de configuration de l'appareil de transmission (1200) en tant que mode Ethernet à condition que la détermination de trame échoue ; dans lequel la trame FlexE est une trame de surdébit.

4. Procédé selon la revendication 3, dans lequel
la trame de surdébit comprend huit blocs de surdébit consécutifs et les informations de gestion de réseau sont encapsulées dans un ou plusieurs blocs de surdébit.

5. Procédé selon la revendication 3, dans lequel avant la réception, dans le canal de distribution correspondant au mode de configuration, des informations de gestion de réseau transmises par l'appareil de transmission (1200), le procédé comprend en outre :
la recherche, dans le flux de données transmis par l'appareil de transmission (1200), des informations de gestion de réseau, et à condition que les informations de gestion de réseau soient trouvées, l'introduction des informations de gestion de réseau dans le canal de distribution sélectionné correspondant au mode de configuration de sorte que les informations de gestion de réseau transmises par l'appareil de transmission (1200) sont reçues dans le canal de distribution sélectionné correspondant au mode de configuration ; et
la recherche, dans le flux de données transmis par l'appareil de transmission (1200), d'une trame FlexE, et à condition que la trame FlexE soit trouvée, l'extraction des informations de gestion de réseau de la trame FlexE et l'introduction des informations de gestion de réseau extraites dans le canal de distribution sélectionné correspondant au mode de configuration de sorte que les informations de gestion de réseau transmises par l'appareil de transmission (1200) sont reçues dans le canal de distribution sélectionné correspondant au mode de configuration ; dans lequel la trame FlexE est une trame de surdébit.

6. Dispositif pour la transmission d'informations de gestion de réseau, comprenant :
un module de sélection (710), qui est configuré pour sélectionner, selon un mode de configuration d'un appareil de transmission (1200), un canal de distribution correspondant au mode de configuration ; et
un module de transmission (720), qui est configuré pour transporter les informations de gestion de réseau dans un flux de données et pour transmettre le flux de données à un appareil de réception (1300) par l'intermédiaire du canal de distribution ;
dans lequel le mode de configuration de l'appareil de transmission (1200) comprend : un mode Ethernet et un mode Ethernet flexible, FlexE,
dans lequel un canal de distribution correspondant au mode Ethernet est un canal Ethernet et un canal de distribution correspondant au mode FlexE est un canal FlexE ;
**caractérisé en ce que** le module de transmission est configuré pour :
à condition que le canal de distribution correspondant au mode de configuration soit un canal Ethernet, insérer les informations de gestion de réseau dans un flux de données Ethernet, et transmettre le flux de données Ethernet à l'appareil de réception (1300) par l'intermédiaire du canal Ethernet ; et
à condition que le canal de distribution correspondant au mode de configuration soit un canal FlexE, encapsuler les informations de gestion de réseau dans une trame FlexE d'un flux de données FlexE, et transmettre le flux de données FlexE à l'appareil de réception (1300) par l'intermédiaire du canal FlexE ; dans lequel la trame FlexE est une trame de surdébit.

7. Dispositif selon la revendication 6, dans lequel
la trame de surdébit comprend huit blocs de surdébit consécutifs et les informations de gestion de réseau sont encapsulées dans un ou plusieurs blocs de surdébit.

8. Dispositif pour la réception d'informations de gestion de réseau, comprenant :
un module d'identification (810), qui est configuré pour identifier, selon un flux de données transmis par un appareil de transmission (1200), un mode de configuration de l'appareil de transmission (1200) ; et
un module de réception (820), qui est configuré pour recevoir, selon le mode de configuration de l'appareil de transmission (1200), les informations de gestion de réseau transmises par l'appareil de transmission (1200), dans lequel les informations de gestion de réseau sont transportées dans le flux de données;
dans lequel le mode de configuration de l'appareil de transmission (1200) comprend : un mode Ethernet et un mode Ethernet flexible, FlexE,
dans lequel un canal de distribution correspondant au mode Ethernet est un canal Ethernet et un canal de distribution correspondant au mode FlexE est un canal FlexE ;
**caractérisé en ce que** le module de transmission (720) est configuré pour :
à condition que le canal de distribution correspondant au mode de configuration soit un canal Ethernet, insérer les informations de gestion de réseau dans un flux de données Ethernet, et transmettre le flux de données Ethernet à l'appareil de réception (1300) par l'intermédiaire du canal Ethernet ; et
à condition que le canal de distribution correspondant au mode de configuration soit un canal FlexE, encapsuler les informations de gestion de réseau dans une trame FlexE d'un flux de données FlexE et transmettre le flux de données FlexE à l'appareil de réception (1300) par l'intermédiaire du canal FlexE ; dans lequel la trame FlexE est une trame de surdébit.

9. Dispositif selon la revendication 8, dans lequel
la trame de surdébit comprend huit blocs de surdébit consécutifs et les informations de gestion de réseau sont encapsulées dans un ou plusieurs blocs de surdébit.

10. Dispositif selon la revendication 8, comprenant en outre :
un module de recherche, qui est configuré pour, avant la réception des informations de gestion de réseau transmises par l'appareil de transmission (1200) dans le canal de distribution correspondant au mode de configuration, rechercher, dans le flux de données transmis par l'appareil de transmission (1200), les informations de gestion de réseau, et à condition que les informations de gestion de réseau soient trouvées, introduire les informations de gestion de réseau dans le canal de distribution sélectionné correspondant au mode de configuration de sorte que les informations de gestion de réseau transmises par l'appareil de transmission (1200) sont reçues dans le canal de distribution sélectionné correspondant au mode de configuration ; et
un module d'extraction, qui est configuré pour, avant la réception des informations de gestion de réseau transmises par l'appareil de transmission (1200) dans le canal de distribution correspondant au mode de configuration, rechercher, dans le flux de données transmis par l'appareil de transmission (1200), une trame FlexE, et à condition que la trame FlexE soit trouvée, extraire les informations de gestion de réseau de la trame FlexE et introduire les informations de gestion de réseau extraites dans le canal de distribution sélectionné correspondant au mode de configuration de sorte que les informations de gestion de réseau transmises par l'appareil de transmission (1200) sont reçues dans le canal de distribution sélectionné correspondant au mode de configuration ; dans lequel la trame FlexE est une trame de surdébit.

11. Système pour des informations de gestion de réseau, comprenant : un dispositif pour la transmission d'informations de gestion de réseau selon la revendication 6 et un dispositif pour la réception d'informations de gestion de réseau selon la revendication 8.
